(19) Europäisches Patentamt
European Patent Office
Office européen des brevets

(11) **EP 4 678 495 A1**

(12) **EUROPEAN PATENT APPLICATION**

(43) Date of publication:
**14.01.2026 Bulletin 2026/03**

(21) Application number: **24187168.0**

(22) Date of filing: **08.07.2024**

(51) International Patent Classification (IPC):
***B60W 40/064*** (2012.01)    ***B60W 40/068*** (2012.01)

(52) Cooperative Patent Classification (CPC):
**B60W 40/064; B60W 40/068;** B60W 2420/54;
B60W 2422/00; B60W 2555/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Truck Corporation
405 08 Göteborg (SE)**

(72) Inventor: **PANAHANDEH, Ghazaleh
414 67 Göteborg (SE)**

(74) Representative: **Ström & Gulliksson AB
P.O. Box 4188
203 13 Malmö (SE)**

Remarks:
Amended claims in accordance with Rule 137(2) EPC.

(54) **APPROACHES FOR DETERMINING OPERATING CONDITIONS OF A VEHICLE**

(57)    A method for determining upcoming operating conditions of a wheel of a vehicle is disclosed.

The method comprises receiving measured audio data from an audio sensor mounted in vicinity of the wheel and configured to measure sound above a portion of the ground surface to be traveled by the wheel, and determining most likely audio-based operating conditions by processing the measured audio data based on an audio model.

The audio model defines a plurality of operating condition classes and comprises a dynamically adjustable component. The most likely audio-based operating conditions corresponds to one of the operating condition classes.

The method also comprises predicting upcoming operating conditions based on the most likely audio-based operating conditions, and updating the dynamically adjustable component of the audio model based on the measured audio data and the predicted operating conditions.

Corresponding computer system, vehicle, computer program product, and non-transitory computer-readable storage medium are also disclosed.

EP 4 678 495 A1

```
┌─────────────────────────────┐
│            411              │        401
│  Receive measured audio data│
└─────────────────────────────┘
              ↓
┌─────────────────────────────┐
│            431              │
│     Determine most likely   │
└─────────────────────────────┘
              ↓
┌─────────────────────────────┐
│            432              │
│          Predict            │
└─────────────────────────────┘
              ↓
┌─────────────────────────────┐
│            451              │
│      Update component       │
└─────────────────────────────┘
```

FIG. 4B

## Description

## TECHNICAL FIELD

The disclosure relates generally to vehicle control. In particular aspects, the disclosure relates to approaches for determining operating conditions of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Generally, vehicle control may be improved if operating condition parameter values are known, or at least measured or estimated with some suitable accuracy. Examples of such useful parameters include rolling resistance and tire-road friction.

A problem with existing approaches for vehicle control is that there is no reliable information regarding upcoming (i.e., future) paramepter values. Thereby, it becomes cumbersome to plan vehicle control actions adequately ahead of time. For example, safety issues and/or under-utilization of available control capacity may occur if the vehicle control uses currently measured parameter values as an estimation of upcoming parameter values.

Therefore, there is a need for alternative approaches for determining operating conditions for a vehicle. For example, approaches for determining upcoming operating conditions might be particularly beneficial.

## SUMMARY

Various aspects may aim to solve, mitigate, alleviate, or eliminate at least some of the above or other disadvantages.

According to a first aspect of the disclosure, a computer system is provided for determining upcoming operating conditions of a wheel of a vehicle. The computer system comprises processing circuitry configured to receive measured audio data from an audio sensor mounted in vicinity of the wheel and configured to measure sound above a portion of the ground surface to be traveled by the wheel, and determine most likely audio-based operating conditions of the wheel by processing the measured audio data based on an audio model. The audio model defines a plurality of operating condition classes and comprises a dynamically adjustable component, and the most likely audio-based operating conditions of the wheel corresponds to one of the operating condition classes. The processing circuitry is also configured to predict upcoming operating conditions of the wheel based on the most likely audio-based operating conditions, and update the dynamically adjustable component of the audio model based on the measured audio data and the predicted operating conditions.

The first aspect of the disclosure may seek to improve the determination of operating conditions of a vehicle by providing knowledge regarding upcoming operating conditions of a wheel of a vehicle, e.g., improve the accuracy of operating condition parameter value prediction for a vehicle. A technical benefit may include improved vehicle control due to the knowledge regarding upcoming operating conditions, e.g., the improved accuracy.

Optionally in some examples, including in at least one preferred example, the processing circuitry may be configured to determine the audio model by non-negative matrix factorization of typical audio data to obtain a plurality of class-specific basis matrices, wherein each basis matrix represents a respective one of the plurality of operating condition classes. A technical benefit may include improved accuracy of the determination of most likely audio-based operating conditions, e.g., due to the use of typical audio data as a starting point.

Optionally in some examples, including in at least one preferred example, the audio model may further comprise a noise-specific basis matrix representing noise. A technical benefit may include improved accuracy of the determination of most likely audio-based operating conditions e.g., due to the use of a noise dimension configured to reduce the impact of noise on the determination.

Optionally in some examples, including in at least one preferred example, the audio model may further comprise an adjustable basis matrix representing the dynamically adjustable component. A technical benefit may include improved accuracy of the determination of most likely audio-based operating conditions e.g., due to the possibility to adjust the audio model to specific conditions which are only temporarily applicable.

Optionally in some examples, including in at least one preferred example, the processing circuitry may be configured to update the dynamically adjustable component of the audio model further based on subsequently experienced operating conditions. A technical benefit may include improved accuracy of the determination of most likely audio-based operating conditions e.g., due to the possibility to improve the audio model over time.

Optionally in some examples, including in at least one preferred example, the upcoming operating conditions may comprise an upcoming rolling resistance and/or an upcoming tire-ground friction.

According to a second aspect of the disclosure, a vehicle is provided comprising the computer system of the first aspect. The second aspect of the disclosure may seek to provide a vehicle with improved vehicle control.

Optionally in some examples, including in at least one preferred example, the vehicle may further comprise an audio sensor mounted in vicinity of the wheel and configured to measure sound above a portion of the ground surface to be traveled by the wheel. A technical benefit may include that the audio measurement data is un-disturbed by events relating to other wheels of the vehicle.

According to a third aspect of the disclosure, a computer-implemented method is provided for determining upcoming operating conditions of a wheel of a vehicle. The method comprises receiving (by processing circuitry of a computer system) measured audio data from an audio sensor mounted in vicinity of the wheel and configured to measure sound above a portion of the ground surface to be traveled by the wheel, and determining (by the processing circuitry) most likely audio-based operating conditions of the wheel by processing the measured audio data based on an audio model. The audio model defines a plurality of operating condition classes and comprises a dynamically adjustable component, and the most likely audio-based operating conditions of the wheel corresponds to one of the operating condition classes. The method also comprises predicting (by the processing circuitry) upcoming operating conditions of the wheel based on the most likely audio-based operating conditions, and updating (by the processing circuitry) the dynamically adjustable component of the audio model based on the measured audio data and the predicted operating conditions.

The third aspect of the disclosure may seek to improve the determination of operating conditions of a vehicle by providing knowledge regarding upcoming operating conditions of a wheel of a vehicle, e.g., improve the accuracy of operating condition parameter value prediction for a vehicle. A technical benefit may include improved vehicle control due to the knowledge regarding upcoming operating conditions, e.g., the improved accuracy.

Optionally in some examples, including in at least one preferred example, the audio model may be determined by non-negative matrix factorization of typical audio data to obtain a plurality of class-specific basis matrices, wherein each basis matrix represents a respective one of the plurality of operating condition classes. A technical benefit may include improved accuracy of the determination of most likely audio-based operating conditions, e.g., due to the use of typical audio data as a starting point.

Optionally in some examples, including in at least one preferred example, the audio model may further comprise a noise-specific basis matrix representing noise. A technical benefit may include improved accuracy of the determination of most likely audio-based operating conditions e.g., due to the use of a noise dimension configured to reduce the impact of noise on the determination.

Optionally in some examples, including in at least one preferred example, the audio model may further comprise an adjustable basis matrix representing the dynamically adjustable component. A technical benefit may include improved accuracy of the determination of most likely audio-based operating conditions e.g., due to the possibility to adjust the audio model to specific conditions which are only temporarily applicable.

Optionally in some examples, including in at least one preferred example, updating the dynamically adjustable component of the audio model may be further based on subsequently experienced operating conditions. A technical benefit may include improved accuracy of the determination of most likely audio-based operating conditions e.g., due to the possibility to improve the audio model over time.

According to a fourth aspect of the disclosure, a computer program product is provided, which comprises program code for performing, when executed by the processing circuitry, the method of the third aspect. The fourth aspect of the disclosure may seek to convey program code for improving vehicle control. A technical benefit may include that new vehicles and/or legacy vehicles may be conveniently configured, by software installation/update, to determine upcoming operating conditions based on audio measurement data.

According to a fifth aspect of the disclosure, a non-transitory computer-readable storage medium is provided comprising instructions, which when executed by the processing circuitry cause the processing circuitry to perform the method of the third aspect. The fifth aspect of the disclosure may seek to convey program code for improving vehicle control. A technical benefit may include that new vehicles and/or legacy vehicles may be conveniently configured, by software installation/update, to determine upcoming operating conditions based on audio measurement data.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is a schematic drawing illustrating a sensor arrangement mounted in the vicinity of a wheel according to some examples.

FIG. 2 is a schematic drawing illustrating a vehicle according to some examples.

FIG. 3 is a schematic drawing illustrating an operating conditions determination system comprising a sensor arrangement and a computer system according to some examples.

**FIG. 4A** is a flowchart illustrating a method according to some examples.

**FIG. 4B** is a flowchart illustrating a method according to some examples.

**FIG. 5A** is a schematic plot illustrating rolling resistance for various scenarios according to some examples.

**FIG. 5B** is a schematic diagram illustrating value regions of lateral and longitudinal forces according to some examples.

**FIG. 6A** is a schematic block diagram illustrating actuation control according to some examples.

**FIG. 6B** is a schematic block diagram illustrating vehicle motion management according to some examples.

**FIG. 7** is a schematic diagram illustrating a computer system for implementing examples disclosed herein, according to some examples.

**FIG. 8** is a schematic drawing illustrating a computer program product, in the form of a non-transitory computer-readable storage medium, according to some examples.

**FIG. 9** is a schematic block diagram of a control unit according to some examples.

## DETAILED DESCRIPTION

The detailed description set forth below provides information and examples of the disclosed technology with sufficient detail to enable those skilled in the art to practice the disclosure.

As already mentioned, vehicle control may be improved if operating condition parameter values, such as rolling resistance and/or tire-road friction, are known, or at least measured or estimated with some suitable accuracy. For example, with a more accurate estimation of tire-road friction, force allocation in a vehicle management approach may be improved in the sense that the probability of allocating forces that cannot be fulfilled by the actuators is decreased, and/or in that the probability of unnecessarily restricting the forces is decreased.

Generally, when operating conditions of a wheel are referred to herein, it is meant to encompass conditions that influence the motion of the vehicle.

Also generally, the exemplification of the following description assumes that the wheel is traveling on a road, while the suggested approaches are more generally applicable on any type of ground (i.e., also off-road).

In some example scenarios comprising steering on dry road conditions, the vehicle typically has no risk of understeering, and the predicted maximum speed is typically not limited in the predicted curvature. However, if the friction is predicted to drop (say from a friction coefficient value of 1.0 to 0.5, or even 0.3) then the speed limit can be adjusted accordingly (e.g., by limiting the global forces values that are available for allocation in a vehicle motion management function).

In some example scenarios comprising water on a cold road surface, the rolling resistance may typically be higher than anticipated without application of the proposed approaches. Consequently, the remaining travelling range until energy replenishment may be overestimated. When more adequate information regarding the remaining travelling range is available, problems associated with energy shortage may be solved (or at least mitigated) by range extending actions (e.g., reduction of vehicle speed, reduction of climate system energy consumption, etc.) and/or by re-scheduling the upcoming stop for energy replenishment.

A problem with existing approaches for vehicle control is that there is no reliable information regarding upcoming (i.e., future) parameter values. Thereby, it becomes cumbersome to plan vehicle control actions adequately ahead of time.

The approaches herein suggest solutions for determination of upcoming operating conditions. A sensor arrangement is provided, which is suitable for mounting in the vicinity of (e.g., in front of) a wheel of a vehicle. The sensor arrangement is configured to perform measurements relating to the upcoming situation for the wheel (e.g., various data for temperatures, humidity, and sound). The measurement data is preferably provided to processing circuitry configured to determine/predict upcoming operating conditions, such as rolling resistance and/or upcoming tire-road friction, based on the measurement data. Thereby, the information regarding upcoming parameter values becomes more accurate and reliable. The predicted upcoming parameter values may be used for vehicle control, which may be consequently improved. Alternatively or additionally, the predicted upcoming parameter values may be used for other purposes.

Generally, the term "upcoming" may be interpreted as something to occur in the near future (e.g., within a time window with limited duration and starting at the current moment in time, or very slightly after the current moment in time). For example, the time window may start immediately after the current moment in time or slightly thereafter (e.g., in the interval of 0 to 5 seconds after the current moment in time). Alternatively or additionally, the duration of the time window may be in an interval of 1 to 10 seconds. More generally, the term "upcoming" may refer to any suitable time (or time period) in the future. For example, a time window starting at, or relatively soon after, the current moment in time and/or with a relatively short duration is typically suitable for capturing relatively sudden changes in operating conditions (e.g., due to a water puddle or a snow patch on the road surface). Alternatively or additionally, a time window starting relatively later and/or with a relatively long duration is typically suitable for capturing relatively slow variations in operating conditions (e.g., due to thermal dynamics of the tire).

Also generally, the term "vicinity" may be interpreted as a location in, or on, the vehicle, which is within a certain distance from some suitable reference point of the wheel. Alternatively or additionally, the term "vicinity" may be interpreted as a location from which it is possible to obtain the measurements that the corresponding sensor is configured to perform.

For example, a temperature sensor configured to measure a road surface temperature of a portion of the road surface to be traveled by the wheel may be preferably mounted such that it has (during traveling of the vehicle) an infrared spectrum line-of-sight to a ground surface area just in front of the wheel (e.g., within 5-50 cm in front of the lowermost part of the wheel, where it touches the ground surface). Generally, the portion of the road surface to be traveled by the wheel may comprise a road surface portion that is yet (largely) unaffected/undisturbed by the wheel. Also generally, the portion of the road surface to be traveled by the wheel may comprise a road surface portion in front of the wheel (using the default movement direction of the vehicle as reference for "in front of") or a road surface portion behind the wheel when the vehicle is reversing (using the default movement direction of the vehicle as reference for "behind").

Alternatively or additionally, a temperature sensor configured to measure a tire temperature of the outer surface of a tire of the wheel may be preferably mounted such that it has (during traveling of the vehicle) an infrared spectrum line-of-sight to a suitable outer surface area of the wheel (e.g., a front-most surface area of the wheel, or an area of the wheel between the front-most surface area of the wheel and the lowermost part of the wheel). Generally, the outer surface area of the wheel may comprise a tire surface portion that is yet (largely) unaffected/undisturbed by the upcoming contact between the wheel and the road surface.

Yet alternatively or additionally, a temperature sensor configured to measure an ambient temperature above the portion of the road surface to be traveled by the wheel may be preferably mounted such that it has (during traveling of the vehicle) an infrared spectrum line-of-sight to a suitable portion of the surroundings of the wheel, such as a space just above the ground surface area and just in front of the wheel (e.g., within 5-50 cm above the ground surface, and within 5-50 cm in front of the lowermost part of the wheel).

Yet alternatively or additionally, a humidity sensor configured to measure an ambient humidity above the portion of the road surface to be traveled by the wheel may be preferably mounted such that it has direct access to a suitable portion of the surroundings of the wheel, such as a space just above the ground surface area and just in front of the wheel (e.g., within 5-50 cm above the ground surface, and within 5-50 cm in front of the lowermost part of the wheel), wherein direct access may be interpreted as a probing tool of the humidity sensor reaching the suitable portion of the surroundings of the wheel. More generally, the humidity sensor may be configured to measure an ambient humidity anywhere in a vicinity of the road surface to be traveled, or even anywhere in a vicinity of the vehicle. Typically, the vicinity of the road surface to be traveled, or the vicinity of the vehicle, may be any suitable location which is undisturbed by additional humidity sources (e.g., vehicle outlets of - for example - hot gas, splashing of tires, etc.).

Yet alternatively or additionally, an audio sensor configured to measure sound above the portion of the road surface to be traveled by the wheel may be preferably mounted such that it has (during traveling of the vehicle) an "audio line-of-sight" (e.g. defined as there being an unobstructed audio path - for at least one relevant audio frequency - between the portion of the road to be travelled and the audio sensor) to a suitable portion of the surroundings of the wheel, such as a space just above the ground surface area and just in front of the wheel. More generally, the audio sensor may be configured to measure sound in a more general vicinity of the wheel (e.g., capturing splashing sounds caused by wet or snowy road surface).

It should be noted that a combination of an audio sensor and a humidity sensor may be particularly beneficial. Such a combination typically increases the reliability of detection of certain conditions (e.g., humid conditions such as rain, wet surface, snowy surface, etc.).

In some examples, mounting a sensor in vicinity of a wheel comprises mounting the sensor in front of the corresponding wheel axle, and/or in front of the wheel.

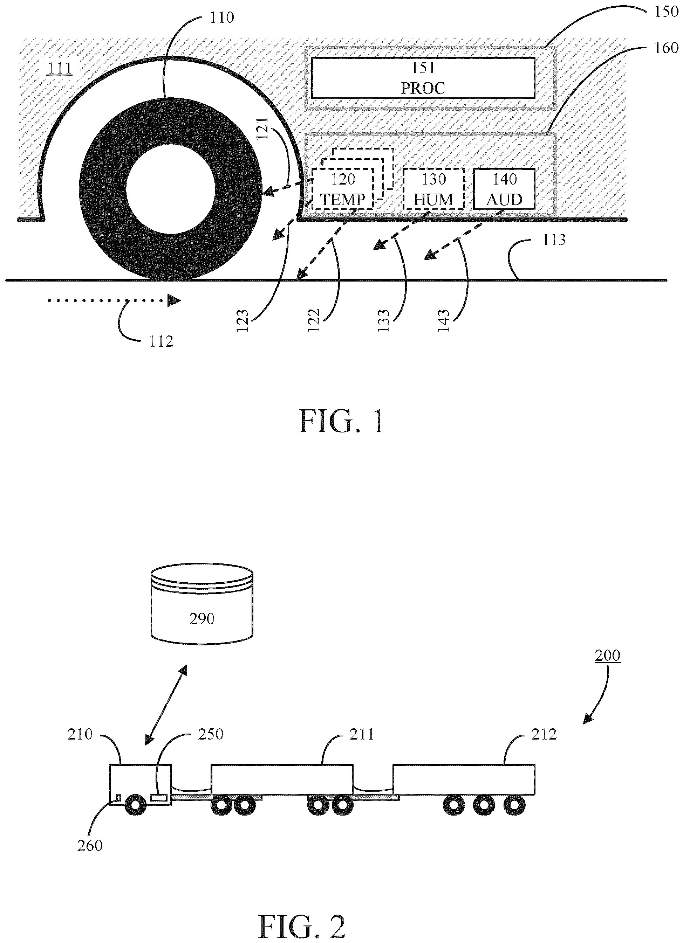

FIG. 1 schematically illustrates a sensor arrangement 160 mounted in vicinity of (e.g., in front of) a wheel 110 of a vehicle 111 according to some examples. The wheel 110 has a traveling direction indicated by 112, along a road surface indicated by 113. The sensor arrangement 160 comprises an audio sensor 140, one or more temperature sensor 120 (optional), and a humidity sensor 130 (optional).

As indicated by 121, the at least one temperature sensor 120 is configured to measure a tire temperature of the outer surface of the tire of the wheel 110. Furthermore, as indicated by 122, the at least one temperature sensor 120 is configured to measure a road surface temperature of a portion of the road surface 113 to be traveled by the wheel 110. In some examples, as indicated by 123, the at least one temperature sensor 120 is also configured to measure an ambient temperature above the portion of the road surface 113 to be traveled by the wheel 110.

The at least one temperature sensor 120 may comprise a single temperature sensor configured to perform all of the temperature measurements 121, 122, and (optionally) 123. Alternatively, the at least one temperature sensor 120 may comprise two, three, or more temperature sensors, each configured to perform one, or some, of the temperature measurements 121, 122, and (optionally) 123. For example, the at least one temperature sensor 120 may comprise a first temperature sensor configured to perform the temperature measurement **121,** a second temperature sensor configured to perform the temperature measurement **122,** and (optionally) a third temperature sensor configured to perform the temperature measurement **123.**

Each of the at least one temperature sensor(s) **120** may be implemented using any suitable sensor configured to measure temperature (e.g., an infra-red, IR, sensor).

As indicated by **133,** the humidity sensor **130** is configured to measure an ambient humidity above the portion of the road surface **113** to be traveled by the wheel **110.**

The humidity sensor **130** may be implemented using any suitable sensor configured to measure humidity (e.g., a capacitive humidity sensor, a thermal humidity sensor, or a resistive humidity sensor).

As indicated by **143,** the audio sensor **140** is configured to measure sound above the portion of the road surface **113** to be traveled by the wheel **110.**

The audio sensor **140** may be implemented using any suitable sensor configured to measure sound (e.g., a microphone).

By measuring conditions associated with an upcoming contact point between the tire and the road surface, the sensor arrangement **160** is suitable for determining upcoming operating conditions of the wheel **110.**

When the wheel **110** is mounted on a foremost wheel axle of the vehicle **111** (using the default movement direction of the vehicle as reference for "foremost"), and/or when one or more of the sensors **120, 130, 140** (e.g., the entire sensor arrangement **160**) is mounted in front of a foremost axle of the vehicle **111,** some particular benefits may follow. In such scenarios, the road surface **113** and its immediate surroundings are typically relatively undisturbed when the measurements are performed, which may yield more useful information. For example, road surface and ambient temperature measurements are not affected by recent traveling of other wheels (e.g., warming up by pressure and contact, cooling down by splashing of water, etc.). Alternatively or additionally, ambient humidity measurements are not affected by recent traveling of other wheels (e.g., increased humidity by splashing of water, etc.). Yet alternatively or additionally, sensors are not affected by debris stirred by recent traveling of other wheels.

**FIG. 1** also schematically illustrates a computer system **150** comprising processing circuitry **151.** Together, the computer system **150** and the sensor arrangement **160,** may be seen as an operating conditions determination system.

In **FIG. 1,** the computer system **150** is illustrated as mounted close to the wheel **110,** and in direct association with the sensor arrangement **160.** However, it should be noted that the computer system **150** may be located at any suitable position in/on the vehicle **111.** In some examples, the computer system **150** is distributed over multiple locations in/on the vehicle **111.**

An operable connection between the sensor arrangement **160** and the computer system **150** may be implemented in any suitable way (e.g., via wired, or wireless, communication). Furthermore, the operable connection may be implemented as a direct connection between the sensor arrangement **160** and the computer system **150** (e.g., by the sensor arrangement comprising an interface unit - such as a tire-road surface sensor interface, TRS I/O - configured to receive the sensor data from each sensor and provide it to the computer system **150**), or may be implemented as a connection via one or more intermediate entities.

Each sensor of the sensor arrangement **160** is configured to provide measurement data to the processing circuitry **151** (e.g., by using the operable connection between the sensor arrangement **160** and the computer system **150**). The processing circuitry **151** is configured to receive the measurement data, and determine upcoming operating conditions (e.g., predict an upcoming rolling resistance and/or an upcoming tire-road friction) based on the measurement data.

For example, a relatively high outer surface tire temperature **121** may cause the processing circuitry **151** to predict a relatively low upcoming rolling resistance and/or a relatively high upcoming tire-road friction.

Alternatively or additionally, a relatively high road surface temperature **122** may cause the processing circuitry **151** to predict a relatively low upcoming rolling resistance and/or a relatively high upcoming tire-road friction.

Yet alternatively or additionally, a relatively high ambient temperature **123** may cause the processing circuitry **151** to predict a relatively low upcoming rolling resistance and/or a relatively high upcoming tire-road friction.

Yet alternatively or additionally, a relatively high ambient humidity **133** may cause the processing circuitry **151** to predict a relatively low upcoming tire-road friction.

Yet alternatively or additionally, a sound **143** indicative of a relatively wet/snowy road surface may cause the processing circuitry **151** to predict a relatively high upcoming rolling resistance and/or a relatively low upcoming tire-road friction. The processing circuitry may be configured analyze the sound measurement data to detect whether it comprises sound patterns that are likely caused by wet/snowy conditions, or a relatively high sound level may be considered to indicate wet/snowy conditions.

In some examples, the processing circuitry **151** is configured to take also other information into account when determining upcoming operating conditions (e.g., predicting the upcoming rolling resistance and/or the upcoming tire-road friction).

For example, a Tire Pressure Monitoring System (TPMS) of the vehicle **111** may provide data (indicative of - for example - one or more of: an inner temperature of the tire, a tire pressure, local acceleration, a tire contact patch) to the processing circuitry **151,** and it may affect the prediction in a similar way as the outer surface tire temperature **121.** Meanwhile, it should be noted that the inner temperature of the tire typically changes more slowly than the outer surface tire temperature.

Alternatively or additionally, the TPMS may provide indications of thermal capacity and wear of the tire, and that data may affect the prediction (e.g., a relatively high thermal capacity may provide for a relatively slow response by the tire to external conditions).

Alternatively or additionally, a climate system of the vehicle **111** may provide data indicative of climate parameters (e.g., ambient temperature of the vehicle, ambient humidity of the vehicle, intensity or sun radiation, direction of sun radiation, etc.) to the processing circuitry **151,** and the climate parameters may affect the prediction in a similar way as the ambient temperature **123,** and/or the ambient humidity **133.** It should be noted that the parameter values from the climate system are typically different from the corresponding parameter values obtained in a vicinity of the wheel (which is why the approaches of measurements close to the wheel as described herein are beneficial), but the parameter values from the climate system may be used as supplements/enhancements of the corresponding parameter values obtained in a vicinity of the wheel. For example, a weighted average between parameter values from the climate system and the corresponding parameter values obtained in a vicinity of the wheel may be used to represent the parameter under consideration.

Yet alternatively or additionally, a wiper sensor of the vehicle **111** may provide data indicative of wet/snowy conditions to the processing circuitry **151,** and that data may affect the prediction in a similar way as the ambient humidity **133,** and/or the sound **143.**

Yet alternatively or additionally, the processing circuitry **151** may have access to tire manufacturer data (e.g., indicating thermal capacity and wear of the tire), and that data may affect the prediction as exemplified above.

Yet alternatively or additionally, the processing circuitry **151** may have access to remote source weather data (e.g., temperature, humidity, wet/snowy conditions) associated with current location of the vehicle and/or with anticipated route of the vehicle, and that data may affect the prediction in a similar way as the ambient temperature **123,** and/or the ambient humidity **133,** and/or the sound **143.** It should be noted that the parameter values from the remote source weather data are typically different from (and/or less detailed than) the corresponding parameter values obtained in a vicinity of the wheel (which is why the approaches of measurements close to the wheel as described herein are beneficial), but the parameter values from the remote source weather data may be used as supplements/enhancements of the corresponding parameter values obtained in a vicinity of the wheel. For example, a weighted average between parameter values from the remote source weather data and the corresponding parameter values obtained in a vicinity of the wheel may be used to represent the parameter under consideration.

According to some examples, a sensor arrangement as described herein may be used to measure road surface temperature of a portion of the road surface to be traveled by the wheel, tire temperature of the outer surface of a tire of the wheel, ambient temperature above the portion of the road surface to be traveled by the wheel, and/or ambient humidity above the portion of the road surface to be traveled by the wheel. This measurement data may be supplemented by information from TPMS. Then, measurements by an audio sensor may be used to confirm or reject findings by the humidity sensor (e.g., if the humidity sensor detects close to 100% humidity and the audio sensor detects splashing sounds, it can be assumed that the road surface is wet).

According to some examples, the predicted tire-road friction may indicate relatively high friction for relatively high measured temperature(s) and relatively low measured humidity, high-to-medium friction for relatively high measured temperature(s) and relatively high measured humidity, medium-to-low friction when water sounds are detected for relatively high measured temperature(s) and relatively high measured humidity, and low friction when water/snow sounds are detected for relatively low measured temperature(s) (e.g., close to zero degrees Celsius) and relatively high measured humidity.

According to some examples, the processing circuitry **151** may be configured to additionally perform one or more further tasks; as will be exemplified further below.

FIG. 2 schematically illustrates an example vehicle **200** for cargo transport where the techniques disclosed herein can be advantageously applied. The vehicle **200** comprises a truck/tractor/towing unit **210** configured to tow one or more trailer unit(s) **211, 212** in a known manner.

The tractor unit **210** and/or any of the trailer unit(s) **211, 212** may comprise a sensor arrangement **260,** which is suitable for determining upcoming operating conditions of a wheel. For example, the sensor arrangement **260** may correspond to the sensor arrangement **160** of **FIG. 1.**

The tractor unit **210** and/or any of the trailer unit(s) **211, 212** may comprise a vehicle control unit (VCU) **250** configured to perform various vehicle (unit) control functions, such as vehicle motion management (VMM). For example, the VCU **250** may comprise the processing circuitry **151** of **FIG. 1.**

In some examples, the VCU **250** may be further configured to upload and/or download information to/-from a wheel operating conditions database **290;** as will be exemplified further below. The uploading/downloading may be implemented in any suitable way (e.g., via wireless communication techniques). The wheel operating conditions database **290** may be implemented in any suitable way (using, e.g., a cloud service, general-purpose storage, dedicated storage, etc.).

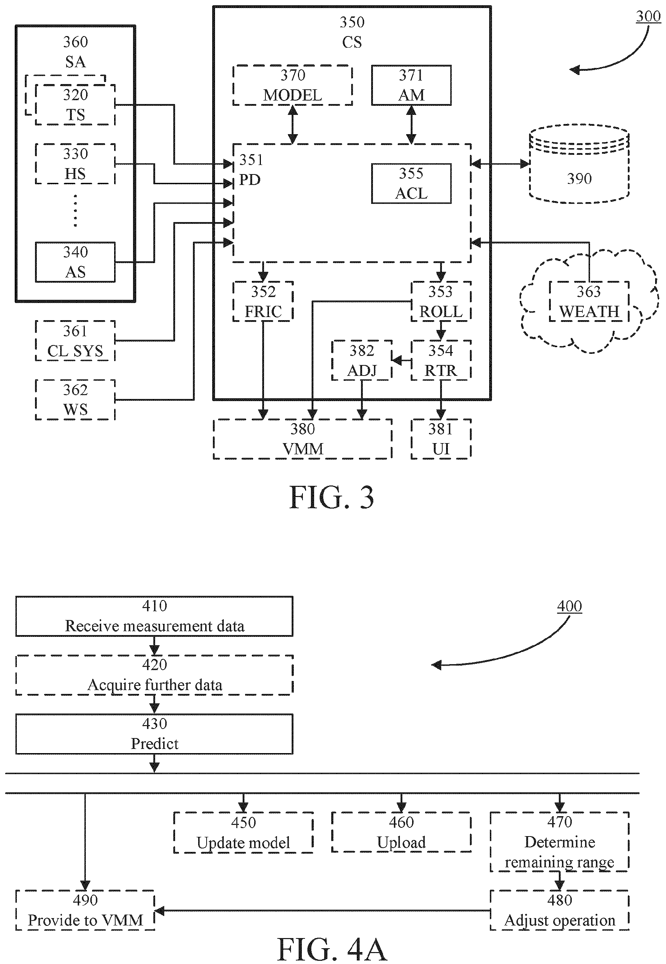

**FIG. 3** schematically illustrates an operating conditions determination system **300** comprising a sensor arrangement (SA) **360** and a computer system (CS) **350**. For example, the sensor arrangement **360** may correspond to the sensor arrangement **160** of **FIG. 1** and/or the sensor arrangement **260** of **FIG. 2.** Alternatively or additionally, the computer system **350** may correspond to the computer system **150** of **FIG. 1** and/or may be comprised in the VCU **250** of **FIG. 2.**

The sensor arrangement **360** is suitable for determining upcoming operating conditions of a wheel of a vehicle, and comprises an audio sensor (AS) **340,** (optionally) one or more temperature sensor (TS) **320,** and (optionally) a humidity sensor (HS) **330;** all configured to be mounted in vicinity of the wheel.

The temperature sensor **320** is configured to measure a tire temperature of the outer surface of a tire of the wheel, a road surface temperature of a portion of the road surface to be traveled by the wheel, and (optionally) an ambient temperature above the portion of the road surface to be traveled by the wheel. The humidity sensor **330** is configured to measure an ambient humidity above the portion of the road surface to be traveled by the wheel. The audio sensor **340** is configured to measure sound above the portion of the road surface to be traveled by the wheel.

Each sensor is configured to provide measurement data to processing circuitry of the computer system **350.** For example, the processing circuitry may comprise a predictor (PD) **351,** configured to receive the measurement data from the sensor(s) **320, 330, 340** of the sensor arrangement **360,** and determine upcoming operating conditions (e.g., predict an upcoming rolling resistance (ROLL) **353** and/or an upcoming tire-road friction (FRIC) **352**) based on the measurement data.

In some examples, the processing circuitry of the computer system **350** (e.g., the predictor **351**) may be configured to assume that upcoming operating conditions are equivalent (or at least similar) to the currently performed measurements. Then, the currently performed measurements may be used to predict (e.g., via a wheel behavior model) the wheel conditions (e.g., tire temperature) going forward. The predicted tire temperature, along with an anticipated vehicle speed, can be used to determine an estimation of the upcoming rolling resistance. If water or snow is detected, the estimation of the upcoming rolling resistance may be adjusted accordingly.

In some examples, the predictor **351** may be configured to receive further information from one or more other sources than the sensor arrangement **360,** and to include such further information in the determination of upcoming operating conditions (e.g., prediction of upcoming rolling resistance **353** and/or upcoming tire-road friction **352**). In **FIG. 3,** the further information is exemplified by data from a climate system (CL SYS) **361,** data from a wiper sensor (WS) **362,** and weather data from a remote source (WEATH) **363.** It should be noted that any suitable further information from any suitable source may be used in the prediction; in addition to the measurement data from the sensor arrangement **360.**

The predicted upcoming rolling resistance **353** and/or upcoming tire-road friction **352** may be provided to a vehicle motion management function (VMM) **380,** which is configured to use the predicted values as suitable (e.g., according to known approaches for using rolling resistance and/or tire-road friction to allocate forces and generate actuator instructions).

Alternatively or additionally, the predicted upcoming rolling resistance **353** may be used to dynamically determine (estimate) a remaining travelling range (RTR) **354** until energy replenishment of the vehicle is needed based on the predicted upcoming rolling resistance. Generally, a relatively high rolling resistance may lead to relatively high energy consumption; thereby draining a fuel tank or a battery relatively fast. Thus, a default estimation of remaining travelling range based on the current level of fuel or battery load, may be decreased when the rolling resistance is relatively high; and vice versa.

The dynamically determined remaining travelling range **354** may be rendered at a user interface (UI) **381.** For example, the UI **381** may provide information to a driver of the vehicle regarding the need for energy replenishment (e.g., fuel refill or battery recharge). Alternatively or additionally, the UI **381** may provide information to an autonomous, or semi-autonomous, route planning system regarding the need for energy replenishment.

Alternatively or additionally, the dynamically determined remaining travelling range **354** may be used to dynamically adjust vehicle operation, as illustrated by **382;** typically to reduce energy consumption responsive to the determined remaining travelling range being shorter than a remaining anticipated route of the vehicle. The adjusted vehicle operation may be input to the VMM **380** (e.g., as motion requests) for implementation. The adjustment of the vehicle operation may take any suitable form. For example, the speed of the vehicle may be reduced, and/or auxiliary devices (e.g., a climate system) may be put in an energy saving mode. Further exemplification is provided in EP 4215875 A1. Generally, adjustments of the vehicle operation to reduce energy consumption may collectively be termed as range management. Also generally, an example of an anticipated route is a transport mission (e.g., where a certain delivery should be made to a certain location within a certain time).

In some examples, the predictor **351** may have access to a behavior model 370, which describes how the wheel behaves under different operating conditions. The wheel behavior model **370** may be any suitable model for wheel behavior. For example, the behavior model **370** may provide a mapping between measurement data values and operating conditions (e.g., rolling resistance value and/or tire-road friction value). Alternatively or additionally, the model of wheel behavior may be a differential model associated with the tire.

For example, the predictor **351** may base the prediction on the wheel behavior model **370.** Alternatively or additionally, the wheel behavior model **370** may be updated based on the received measurement data. For example, if it is noted that the determined upcoming operating conditions (e.g., predicted value(s) of rolling resistance and/or tire-road friction) seems erroneous, the model may be adjusted accordingly.

In some examples, the measurement data from the sensor arrangement **360** and/or corresponding metadata (e.g., measurement data statistics, predicted value(s), updated model, etc.) are uploaded to a wheel operating conditions database **390,** which is accessible (for upload and/or download) by one or more other vehicles. The uploaded information may be labeled to indicate a geographical location of the vehicle, and/or tire type. The database **390** may be configured to collect such uploaded information from a plurality of vehicles, and compile/consolidate it to provide corresponding statistics. Thereby, the database **390** may be able to provide reliable (up-to-date) and geographically detailed information regarding operating conditions. For example, the database **390** may be able to provide information (e.g., geographical location and rolling resistance and/or tire-road friction) relating to occurrence of slippery portions of an otherwise dry road under generally dry weather conditions.

The information of the database **390** may be shared (for upload and/or download) among authorized vehicles only. Alternatively, any vehicle may be allowed to download information of the database **390,** while only authorized vehicles are allowed to perform uploading.

To this end, the predictor **351** may be further configured to download further wheel operating conditions data (e.g., measurement data statistics, predicted value(s), updated model, etc.) from the wheel operating conditions database **390,** which may improve the performance of the predictor when the upcoming rolling resistance and/or the upcoming tire-road friction is further based on the downloaded further wheel operating conditions data. The further wheel operating conditions data may be associated with the current location of the vehicle and/or with the anticipated route of the vehicle. Furthermore, the further wheel operating conditions data may be associated with and tire type of the vehicle.

It may be noted that the further wheel operating conditions data from the wheel operating conditions database **390** may be built from measurements performed at different moments in time. Thus, some of the further wheel operating conditions data may be based on old measurements, and may therefore be less relevant since road conditions can change rapidly. Hence, it may be beneficial to relay not only on such further wheel operating conditions data, but to also have an on-board sensor arrangement.

It may also be noted that the statistics of the database **390** may comprise operating conditions information along continuous - or finely gridded - geographical lines (e.g., corresponding to routes that vehicles of a truck fleet using the suggested sensor arrangement travel).

Generally, the sensors may be configured to perform measurements at any suitable measurement intervals. For example, relatively rapid changes in the operating conditions might only be properly detected when the sensor arrangement is configured to perform measurements relatively often.

**FIG. 4A** illustrates a method **400** according to some examples. The method **400** is a computer-implemented method, and may be implemented by processing circuitry of a computer system (e.g., any of the computer system **150** of **FIG. 1,** the VCU **250** of **FIG. 2,** and the computer system **350** of **FIG. 3**).

As illustrated by step **410,** the method **400** comprises receiving measurement data from a sensor arrangement (e.g., any of the sensor arrangement **160** of **FIG. 1,** the sensor arrangement **220** of **FIG. 2,** and the sensor arrangement **360** of **FIG. 3**).

As illustrated by optional step **420,** the method **400** may also comprise acquiring further data as described and exemplified herein (e.g., data from a climate system, data from a wiper sensor, remote source weather data, data from a wheel operating conditions database, etc.).

As illustrated by step **430,** the method **400** also comprises determine upcoming operating conditions (e.g., predicting an upcoming rolling resistance and/or an upcoming tire-road friction) based on the measurement data; and on the further data when applicable.

As illustrated by optional step **450,** the method **400** may also comprise updating the wheel behavior model based on the received measurement data.

As illustrated by optional step **460,** the method **400** may also comprise uploading the measurement data and/or corresponding metadata to a wheel operating conditions database, which is accessible by one or more other vehicles.

As illustrated by optional step **470,** the method **400** may also comprise dynamically determining a remaining travelling range until energy replenishment of the vehicle is needed based on the predicted upcoming rolling resistance.

As illustrated by optional step **480,** the method **400** may also comprise dynamically adjusting vehicle operation to reduce energy consumption responsive to the determined remaining travelling range being shorter than a remaining anticipated route of the vehicle.

As illustrated by optional step **490,** the method **400** may also comprise providing the determined upcoming operating conditions (e.g., predicted upcoming rolling resistance and/or upcoming tire-road friction) to a VMM function. Alternatively or additionally optional step **490** may comprise providing the adjusted vehicle operation of step **480** to the VMM function.

Approaches for determining upcoming operating conditions of a wheel of a vehicle will now be presented, wherein the determination is based on audio data from an audio sensor. For example, these approaches may be applied in relation to the audio sensor of the senor arrangement mentioned in relation to **FIGs. 1, 2, 3,** and **4A.** It should be noted, however, that the approaches for determining upcoming operating conditions of a wheel of a vehicle may be based on any suitable audio data from any suitable audio sensor.

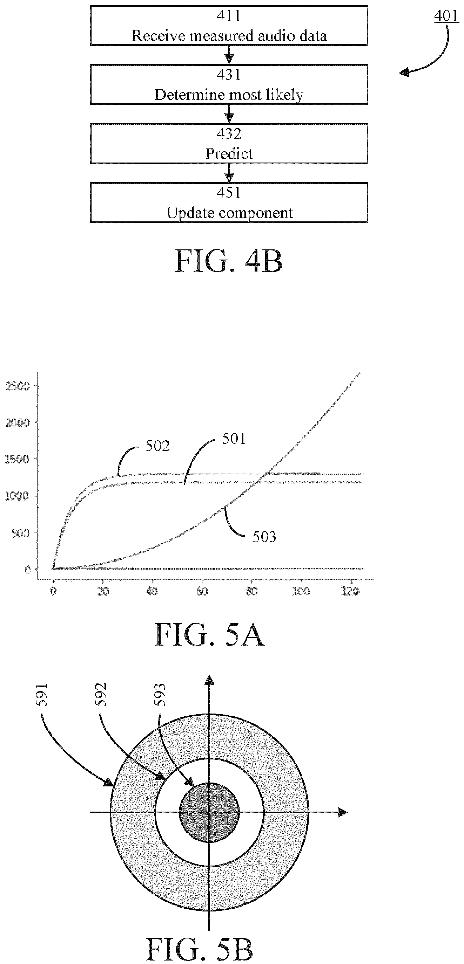

**FIG. 4B** illustrates a method **401** according to some examples, for determining upcoming operating conditions of a wheel of a vehicle (e.g., an upcoming rolling resistance and/or an upcoming tire-ground friction). The method **401** is a computer-implemented method, and may be implemented by processing circuitry of a computer system (e.g., any of the computer system **150** of **FIG. 1,** the VCU **250** of **FIG. 2,** and the computer system **350** of **FIG. 3**). For example, the method **401** may be seen as part of the method **400** of **FIG. 4A.**

As illustrated by **411** (e.g., part of **410** of **FIG. 4A**), measured audio data is received from an audio sensor mounted in vicinity of the wheel and configured to measure sound above a portion of the ground surface to be traveled by the wheel (e.g., the audio sensor of the senor arrangement mentioned in relation to **FIGs. 1, 2, 3,** and **4A**).

As illustrated by **431** and **432** (e.g., part of **430** of **FIG. 4A**), most likely audio-based operating conditions of the wheel are determined by processing the measured audio data based on an audio model, and upcoming operating conditions of the wheel are predicted based on the most likely audio-based operating conditions.

Generally, audio-based operating conditions may, for example, be defined as any operating conditions of a wheel that are identifiable by audio data. For example, the audio data (pertaining to, e.g., tire-ground contact, vehicle power sources, etc.) typically differs between different road conditions (e.g., ice, mud, snow, dry asphalt, etc.) and different modes of operation of the vehicle (e.g., standstill or in motion). Thus, the audio data can be mapped to corresponding operating conditions (corresponding to, e.g., a tire-road friction, a rolling resistance, etc.).

The operating conditions may generally be defined via one or more operating condition classes (corresponding to, e.g., different road conditions and/or different modes of operation of the vehicle; such as standstill, ice, mud, snow, dry asphalt), wherein each operating condition class corresponds to a value space for one or more operating condition parameters (e.g., a range of tire-road friction values, and/or a range of rolling resistance values, etc.). Thus, the audio data can be mapped to corresponding operating conditions class.

The audio model defines a plurality of operating condition classes and comprises a dynamically adjustable component, and the most likely audio-based operating conditions of the wheel corresponds to one of the operating condition classes.

As illustrated by **451** (e.g., part of **450** of **FIG. 4A**), the dynamically adjustable component of the audio model is updated based on the measured audio data and the predicted operating conditions.

Thus, the data collected by the audio sensor is processed based an audio model which reflects audio data for a plurality of typical operating conditions (e.g., standstill, ice, mud, snow, dry asphalt) organized into classes to determine the most likely current operating conditions.

For example, **431** may comprise determining a score for each class subject to the audio data and the audio model, wherein the score reflects how well the audio data matches typical audio expressions for the considered class, and determining the most likely audio-based operating conditions as corresponding to the class which has the "best reflection" score (e.g., a highest score, a score that reflects a smallest difference between the audio data and typical audio expressions for the considered class, etc.) among the classes defined by the audio model. The difference between the audio data and typical audio expressions for the considered class may be expressed in any suitable manner (e.g., using a combination - such as a sum or an average - of per-frequency magnitude differences).

Alternatively or additionally, **432** may comprise combing the most likely audio-based operating conditions determined in **431** with information from one or more other sources of measurement data (e.g., temperature and/or humidity data, such as from the sensor arrangement **160, 360**) to predict the upcoming operating conditions of the wheel. For example, two or more indications of a likely operating condition class may be provided based on different types of measurement data (among which audio data), each with a respective likelihood metric (which may, or may not, be respectively weighted; e.g., depending on a reliability of the corresponding measurement data), and the class with the highest likelihood metric may be selected to represent the predicted upcoming operating conditions.

Generally, the dynamically adjustable component of the audio model enables dynamic adjustment of the audio model during use (e.g., using machine learning).

In some examples, the dynamically adjustable component of the audio model is also updated based on subsequently experienced operating conditions. Information regarding the subsequently experienced operating conditions may be obtained from any suitable source (e.g., sensors of the vehicle) and may comprise any suitable operating condition parameter (e.g., experienced slip, obtainable force(s), etc.).

For example, the predicted operating conditions may be compared to subsequently experienced operating conditions, and any discrepancy may be used to update the audio model (e.g., adjusting the audio model - possibly using machine learning - to provide predicted operating conditions with less discrepancy to the subsequently experienced operating conditions in response to the same or similar measured audio data going forward).

In some examples, the audio model is determined by non-negative matrix factorization (NMF) of typical audio data to obtain a plurality of class-specific basis matrices, wherein each basis matrix represents a respective one of the plurality of operating condition classes. The audio model may further comprise a noise-specific basis matrix representing noise, according to some examples. Alternatively or additionally, the audio model may further comprise an adjustable basis matrix representing the dynamically adjustable component, according to some examples.

Generally, the audio model may comprise a shared portion and/or a vehicle-specific portion. For example, the class-specific basis matrices may correspond to a shared portion and the adjustable basis matrix may correspond to a vehicle-specific portion.

Also generally, the audio model (or parts thereof; e.g., the shared portion) may be comprised in, or co-located with, the behavior model **370**. Alternatively or additionally, the audio model (or parts thereof; e.g., the vehicle-specific portion) may be separated from, and/or not co-located with, the behavior model **370**.

The audio model may be determined and/or update by using machine learning approaches.

For example, the class-specific basis matrices and/or the noise-specific basis matrix may be pre-determined by training the audio model on audio data collected under controlled driving situations which reflect the plurality of operating condition classes (with and without noise). For each of the operating condition classes, NMF may be applied to the training audio data to determine the corresponding basis matrix. Then, the basis matrices may be concatenated.

Alternatively or additionally, the adjustable basis matrix may be dynamically updated by training the audio model on the audio data collected during use (i.e., under uncontrolled driving situations.

The audio model and the audio processing of **431** will now be further exemplified.

Typically, it is preferred that the audio processing is done so that the surrounding vehicle sounds are suppressed. Use of the non-negative matrix factorization is one approach to suppress the vehicle sound. The time domain signal representing audio measurements from the audio sensor may be denoted by $x$, which may be a sum of the signal s, corresponding to the friction between vehicle and road, and the signal $n$ corresponding to the environmental sound (e.g., from the vehicle engine and/or from other vehicle(s)): $x_t = s_t + n_t$, where the subscript $t$ denotes a time index.

One or more of these time-domain signals may be converted to a frequency domain using a fast Fourier transform (FFT; e.g., using a specific duration of the signal in time domain, e.g., 100 ms, and applying standard FFT of a specific size $F$, e.g., 64, 256, or 512), wherein the corresponding frequency domain complex valued matrices (with dimensions corresponding to the duration and the FFT size) are denoted $X, S, N$.

Each portion of the time domain signal results in a vector of size $/2 + 1$. The time domain data may be windowed by applying short-time Fourier transform (STFT; i.e., following the windowing with FFT) to render a collection of corresponding FFT vectors, which can be used as columns to provide the frequency domain complex valued matrix (e.g., $X$). The matrix that corresponds to the point-wise magnitude of the complex values in the frequency domain complex valued matrix $X, S, N$ may be denoted by $\overline{X}, \overline{S}, \overline{N}$, and NMF assumes that $\overline{X} = \overline{S} + \overline{N}$.

For collection of the training data, a vehicle may be operated in a plurality of specific controlled situations where no significant external noise exists (i.e., $n = 0$ and $x = s$), and the correspondingly collected signal represents a clean signal for the conditions under consideration (e.g., standing, ice, mud, snow, dry asphalt, etc.). Training data may also be collected for one or more situations with normal conditions (i.e., $n \neq 0$ and $x = s + n$). In the same manner as explained above, the training data for each clean signal situation may be represented by $\overline{S}_{condition}$ (where "condition" is the conditions under consideration; e.g., standing, ice, mud, snow, dry asphalt, etc.) and the training data for a situation with normal conditions may be represented by $\overline{X}_{normal}$.

Applying NMF on the training data entails the basis matrix for each condition. For example, applying NMF to a matrix $\overline{S}$ of non-negative values results in two non-negative matrices $W$ and $V$, where $\overline{S} \approx WV$, $W$ is the basis matrix and $V$ represents coefficients in the dimension of $W$.

In an example approach to determine the audio model, NMF may first be applied to training data collected in a standing mode to learn the vehicle engine sound at different levels of engine work. The correspondingly learned basis matrix is denoted $W_{standing}$, where the number of basis vectors used as columns of $W_{standing}$ may be seen as a selection parameter.

Then, NMF may be applied to the training data collected in the other controlled situations. For each of these other situations, the correspondingly learned basis matrix is [$W_{standing}$ $W_{condition}$] where $W_{standing}$ is fixed from the previous learning and "condition" is the conditions under consideration (e.g., standing, ice, mud, snow, dry asphalt, etc.). For example, $W_{condition}$ may be initialized randomly to non-negative numbers.

Then, NMF may be applied to the training data collected in the "normal" situation(s), and the correspondingly learned basis matrix is [$W_{standing}$ $W_{dry\ asphalt}$ $W_n$] where $W_{standing}$ and $W_{dry\ asphalt}$ are fixed from the previous learning and $W_n$ represents noise (e.g., sounds from other vehicles). For example, $W_n$ may be initialized randomly to non-negative numbers.

The correspondingly learned basis matrices may be concatenated to get a representation of the audio model as $W = [W_{condition\ 1} \cdots W_{condition\ i}\ W_n\ W_{float}]$, for example $W = [W_{standing}\ W_{ice}\ W_{mud}\ W_{snow}\ W_{dry\ asphalt}\ W_n\ W_{float}]$, where $W_{condition}$ represents a class-specific basis matrix, $W_n$ represents a noise-specific basis matrix, and $W_{float}$ represents an adjustable basis matrix.

Typically, the adjustable basis matrix is applied to represent un-interesting signals in various scenarios (i.e., any environmental signals that are not relevant for determining which class is applicable). Also typically, the adjustable basis matrix can be dynamically updated (e.g., via online learning).

Turning again to the audio processing of **431** and assuming that the audio model has been established as above, the signal $x$ may be collected during an uncontrolled situation (e.g., a real driving situation) and a corresponding frequency domain magnitude spectrum may be represented by a vector $\bar{x}$. Applying NMF entails $\bar{x} \approx Wv$, and the corresponding clean signal may be extracted for each condition as

$$\bar{s}_{condition} = \frac{W_{condition} v_{condition}}{Wv} \odot \bar{x}$$

, where $\odot$ is the element-wise product, and $v_{condition}$ is the portion of $v$ which corresponds to the condition under consideration. The sum of values in $\bar{s}_{condition}$ may be used as a score for the condition under consideration in view of the signal $x$, which may be used to determine the most likely audio-based operating conditions as elaborated on above.

The adjustable basis matrix $W_{float}$ may be updated based on the audio measurements before processing, so that the audio measurements in STFT-magnitude domain are well approximated. For example, an attempt may be made to minimize, or at least reduce, a distance measure between $\bar{x}$ and $Wv$ by adjustment of $W_{float}$.

FIG. 5A schematically illustrates rolling resistance variation for various scenarios according to some examples. The vertical axis (y-axis) represents rolling resistance and the horizontal axis (x-axis) represents vehicle velocity. The rolling resistance on a dry paved road is illustrated by **501,** and the rolling resistance on a wet paved road is illustrated by **502.** The air drag is illustrated by **503.** Thus, it is typically so that the rolling resistance is higher for a wet scenario than for a corresponding dry scenario. Typically, compared to a dry scenario, the heat conduction of the tire will increase in a wet scenario since the water transports heat away from the tire, which will lead to a colder tire yielding higher rolling resistance. It should be noted that **FIG. 5A** is merely meant to provide a crude exemplification of rolling resistance variation. Realistically, the rolling resistance may be associated with other variations. For example, there may be a discontinuity-like behavior around zero velocity so that zero velocity corresponds to zero rolling resistance while a slightly higher velocity corresponds to a considerably higher rolling resistance.

FIG. 5B schematically illustrates value regions of lateral and longitudinal forces according to some examples. The vertical axis (y-axis) represents longitudinal force and the horizontal axis (x-axis) represents lateral force. The value regions may be applied in the force allocation process of a VMM, wherein force allocation within an applied region is allowed and force allocation outside of an applied region is un-allowed. For a scenario with dry asphalt, the tire-road friction may be relatively high (e.g., $\mu \approx 1.0$), and the applicable value region may correspond to all values within the circle **591.** For a scenario with wet asphalt, the tire-road friction may have a medium value (e.g., $\mu \approx 0.5$), and the applicable value region may correspond to all values within the circle **592.** For a scenario with packed snow or aquaplaning risk, the tire-road friction may be relatively low (e.g., $\mu \approx 0.3$), and the applicable value region may correspond to all values within the circle **593.** Thus, adequate prediction of the tire-road friction is beneficial for proper vehicle control.

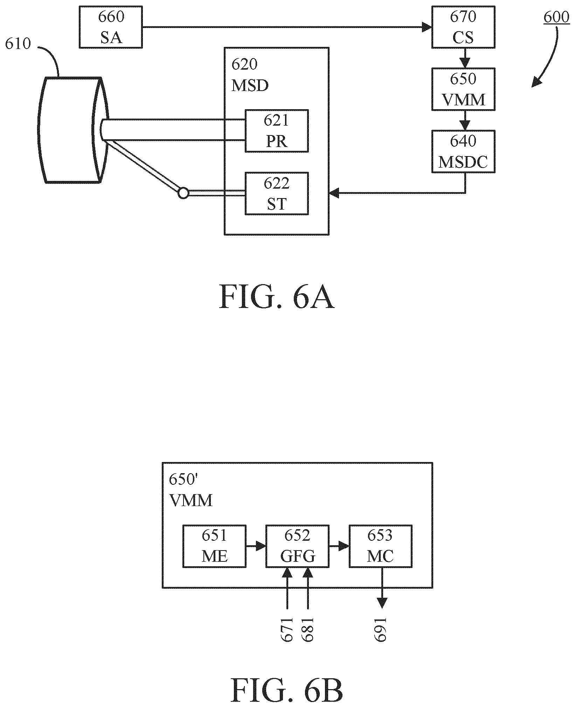

FIG. 6A schematically illustrates functionality **600** for actuation control of a wheel **610** according to some examples. The control of the wheel **610** is performed via some example motion support devices (MSDs) **620;** here comprising a propulsion device (PR) **621,** such as an electric machine (EM) and a power steering arrangement (ST) **622.** A power steering arrangement and a propulsion device are examples of actuators which can be controlled by one or more MSD control units (MSDC) **640.** It should be noted that any suitable actuator(s) may be used as MSD(s), and that **FIG. 6A** only represents an example of MSDs. Other examples include various types of brakes.

A vehicle motion management (VMM) function **650** may be employed to perform force allocation to meet received motion requests in a safe and robust manner. The VMM function **650** communicates actuator instructions to the different MSDs via the MDS control unit(s). The VMM function **650** manages both force generation and MSD coordination; i.e., it determines what forces that are required for different wheels and vehicle units in order to fulfil the motion requests, for instance to accelerate the vehicle according to a requested acceleration profile and/or to generate a requested curvature motion by the vehicle. For example, the VMM function **650** may be comprised in the VCU **250** of **FIG. 2.**

To determine the actuator instructions based on the motion requests, the VMM function **650** typically uses estimated/predicted parameter values associated with the operating conditions of the vehicle (e.g., to dynamically adjust limitations of the force allocation). Examples of such parameter values include rolling resistance and tire-road friction. The parameter values may be provided in the form of upcoming rolling resistance and/or upcoming tire-road friction from a computer system (CS) **670,** and may be based on measurement data from a sensor arrangement (SA) **660.** For example, the computer system **670** may comprise the processing circuitry **151** of **FIG. 1** and the sensor arrangement **660** may comprise the sensor arrangement **160** of **FIG. 1.** Alternatively or additionally, the computer system **670** may be comprised in the VCU **250** of **FIG. 2** and the sensor arrangement **660** may comprise the sensor arrangement **260** of **FIG. 2.** Yet alternatively or additionally, the computer system **670** may comprise the processing circuitry **350** of **FIG. 3** and the sensor arrangement **660** may comprise the sensor arrangement **360** of **FIG. 3.** Yet alternatively or additionally, the computer system **670** may be configured to cause performance of (e.g., perform) one or more steps of the method **400** of **FIG. 4A,** and/or one or more steps of the method **401** of **FIG. 4B.**

**FIG. 6B** schematically illustrates a simplified vehicle motion management (VMM) **650'** according to some examples. For example, the VMM **650'** may illustrate a possible implementation of the VMM function **650** of **FIG. 6A.** Alternatively or additionally, the VMM **650'** may be comprised in the vehicle control unit **250** of **FIG. 2.**

The VMM **650'** comprises motion estimation (ME) **651,** global force generation (GFG) **452,** and motion coordination (MC) **653.**

The motion estimation **651** is configured to provide a representation of the current motion of the vehicle to the global force generation **652.** For example, the current motion may be represented by parameters such as vertical force $F_z$, friction between road and tire $\mu$, vehicle velocity in relation to a vehicle-centered coordinate system $v_x$, road gradient (or road slope) $\alpha$, road banking $\beta$, etc.

The global force generation **652** is configured to determine global forces elements $v$ based on the representation of the current motion and based on motion requests **671** (e.g., an acceleration request, a steering angle, etc.), and to provide the determined global forces elements to the motion coordination **653.**

For example, the motion requests may originate from driver controls of the vehicle (e.g., steering wheel, accelerator pedal, brake pedal, etc.). Alternatively or additionally, the motion requests may originate from an autonomous - or semi-autonomous - driving control function of the vehicle (e.g., requesting longitudinal speed, longitudinal acceleration, steering angle, etc.).

The global force generation **652** may be improved by knowledge regarding upcoming operating conditions (e.g., upcoming rolling resistance and/or upcoming tire-road friction), which may be predicted as described herein and provided at **681.**

The motion coordination **653** is configured to determine actuator request elements u based on the global forces elements $v$. The motion coordination **653** is also configured to provide the actuator request elements $u$ **691,** for operation of the motion support devices.

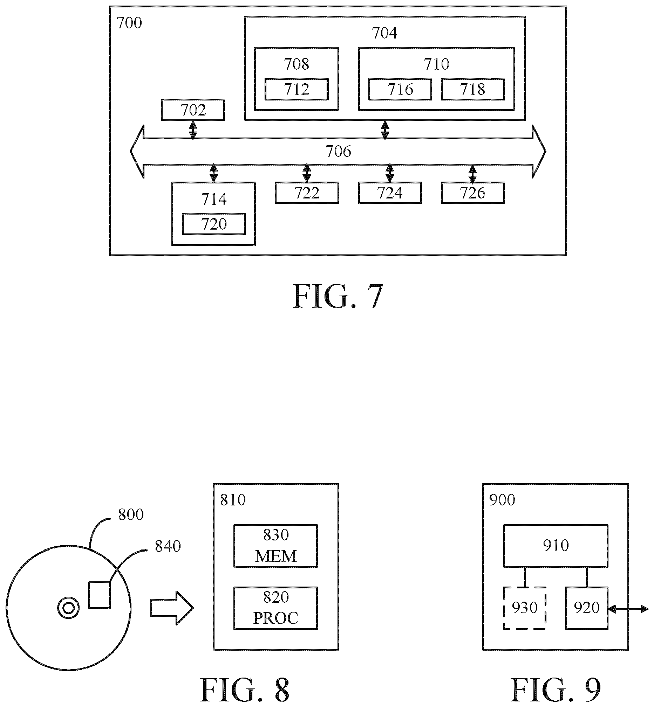

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702**. A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702**. In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702**. The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a VCU.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 8** illustrates a computer program product exemplified as a non-transitory computer-readable medium in the form of a compact disc (CD) ROM **800.** The computer-readable medium has stored thereon program code **840** comprising instructions. The program code is loadable into processing circuitry (PROC; e.g., a data processing unit) **820,** which may, for example, be comprised in a VCU **810.** When loaded into the processing circuitry, the program code may be stored in a memory (MEM) **830** associated with, or comprised in, the processing circuitry. According to some examples, the program code may, when loaded into, and run by, the processing circuitry, cause execution of method steps according to, for example, any of the methods described herein.

**FIG. 9** schematically illustrates, in terms of a number of functional units, the components of a control unit **900** according to some examples. This control unit **900** may be comprised in the vehicle **200** of **FIG. 2;** e.g., in the form of a VCU **250.** Processing circuitry **910** is provided using any combination of one or more of a suitable central processing unit CPU, multiprocessor, microcontroller, digital signal processor DSP, etc., capable of executing software instructions stored in a computer program product, e.g. in the form of a storage medium **930.** The processing circuitry **910** may further be provided as at least one application specific integrated circuit ASIC, or field programmable gate array FPGA.

Particularly, the processing circuitry **910** is configured to cause the control unit **900** to perform a set of operations, or steps, such as one or more steps of the method **400** discussed in connection to **FIG. 4A,** and/or one or more steps of the method **401** discussed in connection to **FIG. 4B.**

Consequently, there is disclosed herein a control unit **900** for controlling a heavy-duty vehicle **200** to determine upcoming operating conditions of a wheel of the vehicle as described herein.

For example, the storage medium **930** may store the set of operations, and the processing circuitry **910** may be configured to retrieve the set of operations from the storage medium **930** to cause the control unit **900** to perform the set of operations. The set of operations may be provided as a set of executable instructions. Thus, the processing circuitry **910** is thereby arranged to execute methods as herein disclosed. In particular, there is disclosed a control unit **900** for controlling an articulated vehicle **200** comprising a tractor **210** and/or one or more towed vehicle units **211, 212,** the control unit comprising processing circuitry **910,** an interface **920** coupled to the processing circuitry **910,** and a memory **930** coupled to the processing circuitry **910,** wherein the memory comprises machine readable computer program instructions that, when executed by the processing circuitry, causes the control unit to perform the methods discussed herein.

The storage medium **930** may also comprise persistent storage, which, for example, can be any single one or combination of magnetic memory, optical memory, solid state memory or even remotely mounted memory.

The control unit **900** may further comprise an interface **920** for communications with at least one external device. As such, the interface **920** may comprise one or more transmitters and receivers, comprising analogue and digital components and a suitable number of ports for wireline or wireless communication.

The processing circuitry **910** controls the general operation of the control unit **900,** e.g., by sending data and control signals to the interface **920** and the storage medium **930,** by receiving data and reports from the interface **920,** and by retrieving data and instructions from the storage medium **930.** Other components, as well as the related functionality, of the control node are omitted in order not to obscure the concepts presented herein.

A first non-exhaustive list of examples:

**Example 1:** A computer system for determining upcoming operating conditions of a wheel of a vehicle, the computer system comprising processing circuitry configured to: receive measured audio data from an audio sensor mounted in vicinity of the wheel and configured to measure sound above a portion of the ground surface to be traveled by the wheel; determine most likely audio-based operating conditions of the wheel by processing the measured audio data based on an audio model, wherein the audio model defines a plurality of operating condition classes and comprises a dynamically adjustable component, and wherein the most likely audio-based operating conditions of the wheel corresponds to one of the operating condition classes; predict upcoming operating conditions of the wheel based on the most likely audio-based operating conditions; and update the dynamically adjustable component of the audio model based on the measured audio data and the predicted operating conditions.

**Example 2:** The computer system of **Example 1,** wherein the processing circuitry is configured to determine the audio model by non-negative matrix factorization of typical audio data to obtain a plurality of class-specific basis matrices, wherein each basis matrix represents a respective one of the plurality of operating condition classes.

**Example 3:** The computer system of **Example 2,** wherein the audio model further comprises a noise-specific basis matrix representing noise.

**Example 4:** The computer system of any of **Examples 2-3,** wherein the audio model further comprises an adjustable basis matrix representing the dynamically adjustable component.

**Example 5:** The computer system of any of **Examples 1-4,** wherein the processing circuitry is configured to update the dynamically adjustable component of the audio model further based on subsequently experienced operating conditions.

**Example 6:** The computer system of any of **Examples 1-5,** wherein the upcoming operating conditions comprises an upcoming rolling resistance and/or an upcoming tire-ground friction.

**Example 7:** A vehicle comprising the computer system of any of **Examples 1-6.**

**Example 8:** The vehicle of **Example 7,** further comprising an audio sensor mounted in vicinity of the wheel and configured to measure sound above a portion of the ground surface to be traveled by the wheel.

**Example 9:** The vehicle of **Example 8,** wherein the audio sensor is comprised in a sensor arrangement for determining upcoming operating conditions of a wheel of a vehicle, the sensor arrangement further comprising at least one temperature sensor, wherein the at least one temperature sensor is mounted in vicinity of the wheel, and is configured to measure: a ground surface temperature of a portion of the ground surface to be traveled by the wheel, and a tire temperature of the outer surface of a tire of the wheel.

**Example 10:** The vehicle of **Example 9,** wherein the at least one temperature sensor is further configured to measure an ambient temperature above the portion of the ground surface to be traveled by the wheel.

**Example 11:** The vehicle of any of **Examples 9-10,** wherein the sensor arrangement further comprises a humidity sensor mounted in vicinity of the wheel, and configured to measure an ambient humidity above the portion of the ground surface to be traveled by the wheel.

**Example 12:** The vehicle of any of **Examples 8-11,** wherein the audio sensor is mounted in front of a foremost axle of the vehicle.

**Example 13:** A computer-implemented method for determining upcoming operating conditions of a wheel of a vehicle, the method comprising: receiving, by processing circuitry of a computer system, measured audio data from an audio sensor mounted in vicinity of the wheel and configured to measure sound above a portion of the ground surface to be traveled by the wheel; determining, by the processing circuitry, most likely audio-based operating conditions of the wheel by processing the measured audio data based on an audio model, wherein the audio model defines a plurality of operating condition classes and comprises a dynamically adjustable component, and wherein the most likely audio-based operating conditions of the wheel corresponds to one of the operating condition classes; predicting, by the processing circuitry, upcoming operating conditions of the wheel based on the most likely audio-based operating conditions; and updating, by the processing circuitry, the dynamically adjustable component of the audio model based on the measured audio data and the predicted operating conditions.

**Example 14:** The method of **Example 13,** wherein the audio model is determined by non-negative matrix factorization of typical audio data to obtain a plurality of class-specific basis matrices, wherein each basis matrix represents a respective one of the plurality of operating condition classes.

**Example 15:** The method of **Example 14** 10, wherein the audio model further comprises a noise-specific basis matrix representing noise.

**Example 16:** The method of any of **Examples 14-15,** wherein the audio model further comprises an adjustable basis matrix representing the dynamically adjustable component.

**Example 17:** The method of any of **Examples 13-16,** wherein updating the dynamically adjustable component of the audio model is further based on subsequently experienced operating conditions.

**Example 18:** The method of any of **Examples 13-17,** wherein the upcoming operating conditions comprises an upcoming rolling resistance and/or an upcoming tire-ground friction.

**Example 19:** A computer program product comprising program code for performing, when executed by the processing circuitry, the method of any of **Examples 13-18.**

**Example 20:**

15. A non-transitory computer-readable storage medium comprising instructions, which when executed by the processing circuitry, cause the processing circuitry to perform the method of any of **Examples 13-18.**

A second non-exhaustive list of examples:

**Example 1:** A sensor arrangement for determining upcoming operating conditions of a wheel of a vehicle, the sensor arrangement comprising at least one temperature sensor, wherein the at least one temperature sensor is configured to be mounted in vicinity of the wheel, and to measure: a ground surface temperature of a portion of the ground surface to be traveled by the wheel, and a tire temperature of the outer surface of a tire of the wheel.

**Example 2:** The sensor arrangement of **Example 1,** wherein the at least one temperature sensor is further configured to measure an ambient temperature above the portion of the ground surface to be traveled by the wheel.

**Example 3:** The sensor arrangement of any of **Examples 1-2,** further comprising a humidity sensor configured to be mounted in vicinity of the wheel, and to measure an ambient humidity above the portion of the ground surface to be traveled by the wheel.

**Example 4:** The sensor arrangement of any of **Examples 1-3,** further comprising an audio sensor configured to be mounted in vicinity of the wheel, and to measure sound above the portion of the ground surface to be traveled by the wheel.

**Example 5:** The sensor arrangement of any of **Examples 1-4,** wherein each sensor is further configured to provide measurement data to processing circuitry.

**Example 6:** The sensor arrangement of any of **Examples 1-5,** wherein the at least one temperature sensor is configured for mounting in front of a foremost axle of the vehicle.

**Example 7:** A computer system comprising processing circuitry, wherein the processing circuitry is configured to receive measurement data from a sensor arrangement according to any of **Examples 1-6,** and wherein the processing circuitry is configured to predict an upcoming rolling resistance and/or an upcoming tire-ground friction based on the measurement data.

**Example 8:** The computer system of **Example 7,** wherein the processing circuitry is configured to predict the upcoming rolling resistance and/or the upcoming tire-ground friction further based on a wheel behavior model.

**Example 9:** The computer system of **Example 8,** wherein the processing circuitry is configured to update the wheel behavior model based on the received measurement data.

**Example 10:** The computer system of any of **Examples 7-9,** wherein the processing circuitry is configured to predict the upcoming rolling resistance and/or the upcoming tire-ground friction further based on one or more of: Tire Pressure Monitoring System (TPMS) data, climate system data, wiper sensor data, tire manufacturer data, and remote source weather data associated with current location of the vehicle and/or with anticipated route of the vehicle.

**Example 11:** The computer system of any of **Examples 7-10,** wherein the processing circuitry is configured to upload the measurement data and/or corresponding metadata to a wheel operating conditions database, which is accessible by one or more other vehicles.

**Example 12:** The computer system of **Example 11,** wherein the processing circuitry is further configured to download further wheel operating conditions data from the wheel operating conditions database, wherein the further wheel operating conditions data is associated with one or more of: current location of the vehicle, anticipated route of the vehicle, and tire type, and wherein the processing circuitry is configured to predict the upcoming rolling resistance and/or the upcoming tire-ground friction further based on the downloaded further wheel operating conditions data.

**Example 13:** The computer system of any of **Examples 7-12,** wherein the processing circuitry is further configured to dynamically determine a remaining travelling range until energy replenishment of the vehicle is needed based on the predicted upcoming rolling resistance.

**Example 14:** The computer system of **Example 13,** wherein the processing circuitry is further configured to dynamically adjust vehicle operation to reduce energy consumption responsive to the determined remaining travelling range being shorter than a remaining anticipated route of the vehicle.

**Example 15:** An operating conditions determination system comprising the sensor arrangement of any of **Examples 1-6** and the computer system of any of **Examples 7-14.**

**Example 16:** A vehicle comprising the sensor arrangement of any of **Examples 1-6,** or the operating conditions determination system of **Example 15.**

**Example 17:** A computer-implemented method, comprising receiving, by processing circuitry of a computer system, measurement data from a sensor arrangement according to any of **Examples 1-6,** and predicting, by the processing circuitry, an upcoming rolling resistance and/or an upcoming tire-ground friction based on the measurement data.

**Example 18:** The method of **Example 17,** wherein predicting the upcoming rolling resistance and/or the upcoming tire-ground friction is further based on a wheel behavior model.

**Example 19:** The method of **Example 18,** further comprising updating the wheel behavior model based on the received measurement data.

**Example 20:** The method of any of **Examples 17-19,** wherein predicting the upcoming rolling resistance and/or the upcoming tire-ground friction is further based on one or more of: Tire Pressure Monitoring System (TPMS) data, climate system data, wiper sensor data, tire manufacturer data, and remote source weather data associated with current location of the vehicle and/or with anticipated route of the vehicle.

**Example 21:** The method of any of **Examples 17-20,** further comprising uploading the measurement data and/or corresponding metadata to a wheel operating conditions database, which is accessible by one or more other vehicles.

**Example 22:** The method of **Example 21,** further comprising downloading further wheel operating conditions data from the wheel operating conditions database, wherein the further wheel operating conditions data is associated with one or more of: current location of the vehicle, anticipated route of the vehicle, and tire type, and wherein predicting the upcoming rolling resistance and/or the upcoming tire-ground friction is further based on the downloaded further wheel operating conditions data.

**Example 23:** The method of any of **Examples 17-22,** further comprising dynamically determining a remaining travelling range until energy replenishment of the vehicle is needed based on the predicted upcoming rolling resistance.

**Example 24:** The method of **Example 23,** further comprising dynamically adjusting vehicle operation to reduce energy consumption responsive to the determined remaining travelling range being shorter than a remaining anticipated route of the vehicle.

**Example 25:** A computer program product comprising program code for performing, when executed by the processing circuitry, the method of any of **Examples 17-24.**

**Example 26:** A non-transitory computer-readable storage medium comprising instructions, which when executed by the processing circuitry, cause the processing circuitry to perform the method of any of **Examples 17-24.**

It should be noted that any one or more examples from the first non-exhaustive list of examples may be combined with any one or more examples from the second non-exhaustive list of examples, as suitable. For example, the sensor arrangement of the second non-exhaustive list of examples may be used to provide the audio data mentioned in the first non-exhaustive list of examples. Alternatively or additionally, the method according to the first non-exhaustive list of examples may be executed as part of the method according to the second non-exhaustive list of examples. Yet alternatively or additionally, the processing circuitry of the computer system according to the first non-exhaustive list of examples and the processing circuitry of the computer system according to the second non-exhaustive list of examples may be implemented as a single instance of processing circuitry of a computer system.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (150, 250, 350, 700) for determining upcoming operating conditions of a wheel (110) of a vehicle (200), the computer system comprising processing circuitry (151, 451) configured to:

   receive measured audio data from an audio sensor (140, 340) mounted in vicinity of the wheel and configured to measure sound above a portion of the ground surface to be traveled by the wheel;
   determine most likely audio-based operating conditions of the wheel by processing the measured audio data based on an audio model, wherein the audio model defines a plurality of operating condition classes and comprises a dynamically adjustable component, and wherein the most likely audio-based operating conditions of the wheel corresponds to one of the operating condition classes;
   predict upcoming operating conditions of the wheel based on the most likely audio-based operating conditions; and
   update the dynamically adjustable component of the audio model based on the measured audio data and the predicted operating conditions.

2. The computer system of claim 1, wherein the processing circuitry is configured to determine the audio model by non-negative matrix factorization of typical audio data to obtain a plurality of class-specific basis matrices, wherein each basis matrix represents a respective one of the plurality of operating condition classes.

3. The computer system of claim 2, wherein the audio model further comprises a noise-specific basis matrix representing noise.

4. The computer system of any of claims 2-3, wherein the audio model further comprises an adjustable basis matrix representing the dynamically adjustable component.

5. The computer system of any of claims 1-4, wherein the processing circuitry is configured to update the dynamically adjustable component of the audio model further based on subsequently experienced operating conditions.

6. The computer system of any of claims 1-5, wherein the upcoming operating conditions comprises an upcoming rolling resistance (353) and/or an upcoming tire-ground friction (352).

7. A vehicle (200) comprising the computer system of any of claims 1-6.

8. The vehicle of claim 7, further comprising an audio sensor mounted in vicinity of the wheel and configured to measure sound above a portion of the ground surface to be traveled by the wheel.

9. A computer-implemented method (401) for determining upcoming operating conditions of a wheel of a vehicle, the method comprising:

   receiving (411), by processing circuitry of a computer system, measured audio data from an audio sensor mounted in vicinity of the wheel and configured to measure sound above a portion of the ground surface to be traveled by the wheel;
   determining (431), by the processing circuitry, most likely audio-based operating conditions of the wheel by processing the measured audio data based on an audio model, wherein the audio model defines a plurality of operating condition classes and comprises a dynamically adjustable component, and wherein the most likely audio-based operating conditions of the wheel corresponds to one of the operating condition classes;
   predicting (432), by the processing circuitry, upcoming operating conditions of the wheel based on the most likely audio-based operating conditions; and
   updating (451), by the processing circuitry, the dynamically adjustable component of the audio model based on the measured audio data and the predicted operating conditions.

10. The method of claim 9, wherein the audio model is determined by non-negative matrix factorization of typical audio data to obtain a plurality of class-specific basis matrices, wherein each basis matrix represents a respective one of the plurality of operating condition classes.

11. The method of claim 10, wherein the audio model further comprises a noise-specific basis matrix representing noise.

12. The method of any of claims 10-11, wherein the audio model further comprises an adjustable basis matrix representing the dynamically adjustable component.

13. The method of any of claims 9-12, wherein updating the dynamically adjustable component of the audio model is further based on subsequently experienced operating conditions.

14. A computer program product (800) comprising program code for performing, when executed by the processing circuitry, the method of any of claims 9-13.

15. A non-transitory computer-readable storage medium (800) comprising instructions, which when executed by the processing circuitry, cause the processing circuitry to perform the method of any of claims 9-13.

**Amended claims in accordance with Rule 137(2) EPC.**

1. A computer system (150, 250, 350, 700) for determining upcoming operating conditions of a wheel (110) of a vehicle (200), the computer system comprising processing circuitry (151, 451) configured to:

   receive measured audio data from an audio sensor (140, 340) mounted in vicinity of the wheel and configured to measure sound above a portion of the ground surface to be traveled by the wheel;
   determine most likely audio-based operating conditions of the wheel by processing the measured audio data based on an audio model, wherein the audio model defines a plurality of operating condition classes, and comprises a shared portion and a vehicle-specific portion, wherein a dynamically adjustable component reflecting specific conditions which are only temporarily applicable corresponds to the vehicle-specific portion, and wherein the most likely audio-based operating conditions of the wheel corresponds to one of the operating condition classes;
   predict upcoming operating conditions of the wheel based on the most likely audio-based operating conditions; and

update the dynamically adjustable component of the audio model based on the measured audio data and the predicted operating conditions.

2. The computer system of claim 1, wherein the processing circuitry is configured to determine the audio model by non-negative matrix factorization of typical audio data to obtain a plurality of class-specific basis matrices, wherein each basis matrix represents a respective one of the plurality of operating condition classes.

3. The computer system of claim 2, wherein the audio model further comprises a noise-specific basis matrix representing noise.

4. The computer system of any of claims 2-3, wherein the audio model further comprises an adjustable basis matrix representing the dynamically adjustable component.

5. The computer system of any of claims 1-4, wherein the processing circuitry is configured to update the dynamically adjustable component of the audio model further based on subsequently experienced operating conditions.

6. The computer system of any of claims 1-5, wherein the upcoming operating conditions comprises an upcoming rolling resistance (353) and/or an upcoming tire-ground friction (352).

7. A vehicle (200) comprising the computer system of any of claims 1-6.

8. The vehicle of claim 7, further comprising an audio sensor mounted in vicinity of the wheel and configured to measure sound above a portion of the ground surface to be traveled by the wheel.

9. A computer-implemented method (401) for determining upcoming operating conditions of a wheel of a vehicle, the method comprising:

receiving (411), by processing circuitry of a computer system, measured audio data from an audio sensor mounted in vicinity of the wheel and configured to measure sound above a portion of the ground surface to be traveled by the wheel;
determining (431), by the processing circuitry, most likely audio-based operating conditions of the wheel by processing the measured audio data based on an audio model, wherein the audio model defines a plurality of operating condition classes, and comprises a shared portion and a vehicle-specific portion, wherein a dynamically adjustable component reflecting specific conditions which are only temporarily applicable corresponds to the vehicle-specific portion, and wherein the most likely audio-based operating conditions of the wheel corresponds to one of the operating condition classes;
predicting (432), by the processing circuitry, upcoming operating conditions of the wheel based on the most likely audio-based operating conditions; and
updating (451), by the processing circuitry, the dynamically adjustable component of the audio model based on the measured audio data and the predicted operating conditions.

10. The method of claim 9, wherein the audio model is determined by non-negative matrix factorization of typical audio data to obtain a plurality of class-specific basis matrices, wherein each basis matrix represents a respective one of the plurality of operating condition classes.

11. The method of claim 10, wherein the audio model further comprises a noise-specific basis matrix representing noise.

12. The method of any of claims 10-11, wherein the audio model further comprises an adjustable basis matrix representing the dynamically adjustable component.

13. The method of any of claims 9-12, wherein updating the dynamically adjustable component of the audio model is further based on subsequently experienced operating conditions.

14. A computer program product (800) comprising program code for performing, when executed by the processing circuitry, the method of any of claims 9-13.

15. A non-transitory computer-readable storage medium (800) comprising instructions, which when executed by the processing circuitry, cause the processing circuitry to perform the method of any of claims 9-13.

FIG. 1

FIG. 2

300

| 360 | 350 |
| SA | CS |

| 320 | 370 | 371 |
| TS | MODEL | AM |

| 330 | | 351 | 355 | | 390 |
| HS | | PD | ACL | | |

| 340 | 352 | 353 |
| AS | FRIC | ROLL |

| 361 | 382 | 354 | 363 |
| CL SYS | ADJ | RTR | WEATH |

| 362 | 380 | 381 |
| WS | VMM | UI |

**FIG. 3**

---

400

| 410 |
| Receive measurement data |

| 420 |
| Acquire further data |

| 430 |
| Predict |

| 450 | 460 | 470 |
| Update model | Upload | Determine remaining range |

| 490 | 480 |
| Provide to VMM | Adjust operation |

**FIG. 4A**

FIG. 4B

FIG. 5A

FIG. 5B

FIG. 6A

FIG. 6B

FIG. 7

FIG. 8

FIG. 9

Europäisches
Patentamt

European
Patent Office

Office européen
des brevets

# EUROPEAN SEARCH REPORT

**Application Number**

EP 24 18 7168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2020 214620 A1 (ZAHNRADFABRIK FRIEDRICHSHAFEN [DE]) 25 May 2022 (2022-05-25) | 1,5-9, 13-15 | INV. B60W40/064 B60W40/068 |
| Y | * paragraphs [0010] - [0044]; figure 1 * | 2-4, 10-12 | |
| X | US 2022/219704 A1 (WANG WEI [US] ET AL) 14 July 2022 (2022-07-14) | 1-3,6-9, 14,15 | |
| Y | * paragraphs [0001] - [0049]; figure 7 * | 2-4, 10-12 | |
| Y | SE 2 051 550 A1 (ALGORIFFIX AB [SE]) 23 June 2022 (2022-06-23) * page 16 * | 2-4, 10-12 | |

**TECHNICAL FIELDS SEARCHED (IPC)**

B60W

The present search report has been drawn up for all claims

| Place of search | Date of completion of the search | Examiner |
|---|---|---|
| Munich | 5 December 2024 | Stolle, Martin |

EPO FORM 1503 03.82 (P04C01)

## ANNEX TO THE EUROPEAN SEARCH REPORT
## ON EUROPEAN PATENT APPLICATION NO.

EP 24 18 7168

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | Publication date | Patent family member(s) | | Publication date |
|---|---|---|---|---|
| DE 102020214620 A1 | 25-05-2022 | DE 102020214620 A1 | | 25-05-2022 |
| | | WO 2022106342 A1 | | 27-05-2022 |
| US 2022219704 A1 | 14-07-2022 | CN 114802291 A | | 29-07-2022 |
| | | EP 3960568 A2 | | 02-03-2022 |
| | | JP 2022050599 A | | 30-03-2022 |
| | | KR 20220013579 A | | 04-02-2022 |
| | | US 2022219704 A1 | | 14-07-2022 |
| SE 2051550 A1 | 23-06-2022 | NONE | | |

EPO FORM P0459

For more details about this annex : see Official Journal of the European Patent Office, No. 12/82

## EP 4 678 495 A1

**Patent documents cited in the description**

- EP 4215875 A1